# EUROPEAN PATENT SPECIFICATION

(11) **EP 4 310 813 B1**
(45) Date of publication and mention of the grant of the patent: **13.08.2025**
(21) Application number: 21931503.3
(22) Date of filing: 17.03.2021
(51) Int. Cl.: G08G 1/09, H04W 36/00, B60W 60/00, G01C 21/00, H04W 36/02, H04W 36/32

(54) **APPLICATION SERVER, BASE STATION, DYNAMIC MAP DISTRIBUTION SYSTEM, CONTROL CIRCUIT, STORAGE MEDIUM, AND INFORMATION DISTRIBUTION METHOD**
ANWENDUNGSSERVER, BASISSTATION, DYNAMISCHES KARTENVERTEILUNGSSYSTEM, STEUERSCHALTUNG, SPEICHERMEDIUM UND INFORMATIONSVERTEILUNGSVERFAHREN
SERVEUR D'APPLICATION, STATION DE BASE, SYSTÈME DE DISTRIBUTION DE CARTES DYNAMIQUES, CIRCUIT DE COMMANDE, SUPPORT DE STOCKAGE ET PROCÉDÉ DE DISTRIBUTION D'INFORMATIONS

(43) Date of publication of application: 24.01.2024
(73) Proprietor: MITSUBISHI ELECTRIC CORPORATION, Chiyoda-ku Tokyo 100-8310 (JP)
(72) Inventor: UMEDA, Shusaku, Tokyo 100-8310 (JP); TAIRA, Akinori, Tokyo 100-8310 (JP); OCHIAI, Mari, Tokyo 100-8310 (JP); SUEHIRO, Takeshi, Tokyo 100-8310 (JP); FUJII, Teruko, Tokyo 100-8310 (JP); ASAHARA, Takashi, Tokyo 100-8310 (JP); TAKEYASU, Masaaki, Tokyo 100-8310 (JP)
(74) Representative: Pfenning, Meinig & Partner mbB
(86) International application number: PCT/JP2021/010758
(87) International publication number: WO 2022/195751

(56) References cited:
- EP-A1- 3 691 335
- WO-A1-2019/087464
- JP-A- 2009 135 864
- JP-A- 2009 135 864
- JP-A- 2017 033 121
- JP-A- 2018 106 504
- JP-A- 2019 068 411
- JP-A- 2019 087 847

## Description

### Field

The present disclosure relates to an application server, a base station, a dynamic map delivery system, a control circuit, a storage medium, and an information delivery method for delivering a dynamic map.

### Background

There is a system in which a data delivery system delivers a dynamic map as a V2X application to a vehicle that implements automated driving under a specific condition (Level 2 automated driving) so as to implement fully automated driving under a specific condition (Level 4 automated driving). The dynamic map is a digital map in which dynamic information such as movement of persons and semi-static information such as construction information are overlaid on static information such as a three-dimensional map including lanes, structures, and the like. The level of automated driving can be raised by delivering the dynamic map, which is important for determining the driving policy, to the vehicle.

A bottleneck in maintaining the performance of Level 4 automated driving is the communication quality between the vehicle to which the dynamic map is delivered and the network or the communication quality between the vehicle to which the dynamic map is delivered and the roadside unit. Therefore, standards for 5th Generation (5G) mobile communication systems specify that deterioration in communication quality is avoided by constantly setting up redundant sessions.

In addition, 5G standards also consider situations in which redundant sessions cannot be set up due to the influence of the communication environment, vehicle capacity, and the like, specifying that communication interruption or fallback operation is performed in situations in which redundant sessions cannot be set up. When a vehicle performs base station switching by handover under the environment of communication interruption or fallback operation, continued delivery of the dynamic map to the vehicle causes a loss of delivery information, which greatly affects the performance of the automated driving.

For this reason, in the communication control system of Patent Literature 1, the vehicle communication device calculates the handover timing for base station switching based on the level of signals received from base stations. Then, the vehicle control device lowers the service level of travel assistance control based on the handover timing.

Patent document 2 discloses an interface unit that receives the plan timing of execution of handover and the transmission delay time between terminal devices through the base station apparatus at the origin. A switch control unit classifies the source data transmitted to the terminal device into the data transmitted to the base station apparatus at origin and the data transmitted to the base station apparatus at destination based on plan timing and transmission delay time.

### Citation List

### Patent Literature

Patent Literature 1: Japanese Patent Application Laid-open No. 2014-044639
Patent Literature 2: Japanese Patent Application Laid-open No. 2009-135864 A

### Summary

### Technical Problem

However, with the technique of Patent Literature 1, although the handover timing can be estimated, the vehicle cannot receive the dynamic map at the handover timing. This is problematic in that the vehicle cannot update the dynamic map under fallback operation and has to lower the level of automated driving.

The present disclosure has been made in view of the above, and an object thereof is to obtain an application server capable of executing base station switching by handover without lowering the level of automated driving even under fallback operation. Solution to Problem

The solution is provided by the features of the independent claims.

### Advantageous Effects of Invention

The application server according to the present disclosure can achieve the effect of executing base station switching by handover without lowering the level of automated driving even under fallback operation.

### Brief Description of Drawings

FIG. 1 is a diagram illustrating a configuration of a dynamic map delivery system according to a first embodiment.
FIG. 2 is a sequence diagram illustrating a procedure for delivering dynamic map information by the dynamic map delivery system according to the first embodiment.
FIG. 3 is a diagram illustrating a configuration of a dynamic map delivery system according to a third embodiment.
FIG. 4 is a sequence diagram illustrating a procedure for delivering dynamic map information by the dynamic map delivery system according to the third embodiment.
FIG. 5 is a sequence diagram illustrating a procedure for delivering dynamic map information by a dynamic map delivery system according to a fourth embodiment.
FIG. 6 is a diagram illustrating a configuration of a dynamic map delivery system according to a fifth embodiment.
FIG. 7 is a sequence diagram illustrating a procedure for delivering dynamic map information by the dynamic map delivery system according to the fifth embodiment.
FIG. 8 is a diagram illustrating an exemplary configuration of processing circuitry in the case that the processing circuitry provided in the application server according to the first to fifth embodiments is implemented by a processor and a memory.
FIG. 9 is a diagram illustrating an example of processing circuitry in the case that the processing circuitry provided in the application server according to the first to fifth embodiments is implemented by dedicated hardware.

### Description of Embodiments

Hereinafter, an application server, a base station, a dynamic map delivery system, a control circuit, a storage medium, and an information delivery method according to embodiments of the present disclosure will be described in detail with reference to the drawings.

### First Embodiment.

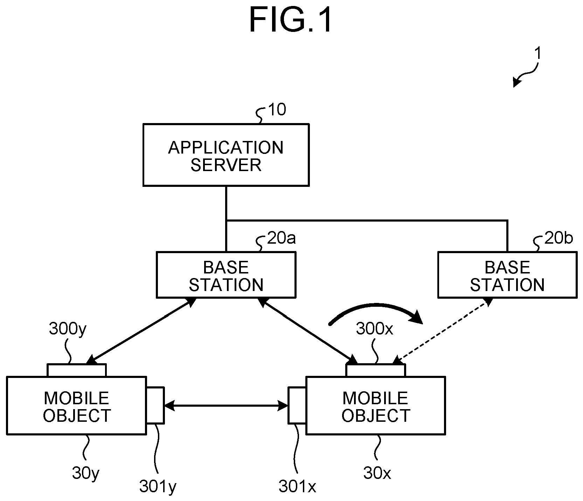

FIG. 1 is a diagram illustrating a configuration of a dynamic map delivery system according to the first embodiment. The dynamic map delivery system 1 includes an application server 10, base stations 20a and 20b, and mobile objects 30x and 30y. An example of the mobile objects 30x and 30y is a communication terminal that is installed in a vehicle or the like, that is, a mobile communication device.

### • Application server 10

The application server 10 is a server that stores application data including dynamic map information, i.e. information of a dynamic map. The dynamic map information is information that is provided to the mobile objects 30x and 30y. The application server 10 delivers the dynamic map information to the mobile object 30x via the base station 20a or the base station 20b.

The dynamic map information includes static information that is information of a three-dimensional map such as the position of road surfaces, the position of lanes, and the position of buildings. The dynamic map information also includes semi-static information such as a schedule of traffic regulations, a schedule of road construction, and weather information. The dynamic map information also includes semi-dynamic information such as information on accidents, information on traffic jams, and information on traffic regulations. The dynamic map information also includes dynamic information such as movement of persons. The application server 10 stores the dynamic map information in which the static information, the semi-static information, the semi-dynamic information, and the dynamic information are combined.

The application server 10 delivers the dynamic map information to the mobile objects 30x and 30y in accordance with the timing at which the mobile objects 30x and 30y update the dynamic map information. The application server 10 may be disposed in any way in the dynamic map delivery system 1. For example, the application server 10 may be disposed ahead of the core network for communication, or may be disposed immediately below the base stations 20a and 20b. In addition, the application server 10 may be installed at distributed locations according to the update frequency of delivery data such as the dynamic map information.

### • Base stations 20a and 20b

The base stations 20a and 20b are communication base stations that deliver delivery data such as the dynamic map information to users (in the first embodiment, the mobile objects 30x and 30y) designated by the application server 10.

The base station 20a can transmit the dynamic map information to the mobile objects 30x and 30y in a first area. The base station 20b can transmit the dynamic map information to the mobile objects 30x and 30y in a second area. The base station 20a is a first base station, and the base station 20b is a second base station. The first area and the second area partially overlap, and handover can be executed in the overlapping area.

Either the base station 20a or the base station 20b can connect to the mobile object 30x at a specific timing and provide the service of delivering delivery data such as the dynamic map information. During the fallback operation of the mobile object 30x, the base stations 20a and 20b are never simultaneously connected to the mobile object 30x. When the mobile object 30x in the fallback operation performs a handover, the base stations 20a and 20b undergo an instantaneous interruption of communication with the mobile object 30x.

Similarly, either the base station 20a or the base station 20b can connect to the mobile object 30y at a specific timing and provide the service of delivering delivery data such as the dynamic map information. During the fallback operation of the mobile object 30y, the base stations 20a and 20b are never simultaneously connected to the mobile object 30y. When the mobile object 30y in the fallback operation performs a handover, the base stations 20a and 20b undergo an instantaneous interruption of communication with the mobile object 30y.

### • Mobile object 30x

The mobile object 30x includes a mobile communication unit 300x capable of executing communication with the base stations 20a and 20b. In addition, the mobile object 30x includes a sidelink communication unit 301x capable of executing sidelink communication with a nearby mobile object (here, the mobile object 30y) or a roadside unit (not illustrated). Note that the following description refers to a case where the sidelink communication unit 301x of the mobile object 30x executes communication processing with the mobile object 30y.

In the mobile object 30x, the mobile communication unit 300x acquires the dynamic map information from the application server 10 via the base station 20a or 20b. FIG. 1 illustrates a situation in which the mobile communication unit 300x is connected to the base station 20a and is about to perform a handover to the base station 20b.

The mobile communication unit 300x of the mobile object 30x cannot be connected to a plurality of base stations simultaneously during fallback operation. The term "fallback operation" as used herein refers to an operation in which the mobile object 30x continues operational processing while executing restrictions on processing speed, some functions, and the like.

When performing a handover during fallback operation, the mobile communication unit 300x is for a moment not connected to either the base station 20a or the base station 20b. When the mobile object 30x performs a handover during fallback operation, a sidelink communication unit 301y to be described later transmits the dynamic map information to the mobile object 30x. As a result, the sidelink communication unit 301x acquires the dynamic map information via the mobile object 30y, and the mobile object 30x executes Level 4 automated driving.

The first embodiment describes a case where the mobile object 30x acquires the dynamic map information from the application server 10 via the mobile object 30y during the handover, but the mobile object 30x may acquire the dynamic map information from the application server 10 via another communication device. According to the invention, the mobile object 30x may acquire the dynamic map information from the application server 10 via a roadside unit having a function similar to that of the mobile object 30y.

### • Mobile object 30y

The mobile object 30y has a function similar to that of the mobile object 30x. The mobile object 30y includes a mobile communication unit 300y capable of executing communication with the base stations 20a and 20b. In addition, the mobile object 30y includes the sidelink communication unit 301y capable of executing sidelink communication with a nearby mobile object (here, the mobile object 30x) or a roadside unit (not illustrated). Note that the following description refers to a case where the sidelink communication unit 301y of the mobile object 30y executes communication processing with the mobile object 30x.

In the mobile object 30y, the mobile communication unit 300y acquires the dynamic map information from the application server 10 via the base station 20a or 20b. FIG. 1 illustrates a situation in which the mobile communication unit 300y is connected to the base station 20a and is capable of receiving the dynamic map information from the application server 10.

The mobile communication unit 300y of the mobile object 30y cannot be connected to a plurality of base stations simultaneously during fallback operation. Therefore, when performing a handover during fallback operation, the mobile communication unit 300y is for a moment not connected to either the base station 20a or the base station 20b. When the mobile object 30y performs a handover during fallback operation, the sidelink communication unit 301x transmits the dynamic map information to the mobile object 30y. As a result, the sidelink communication unit 301y acquires the dynamic map information via the mobile object 30x, and the mobile object 30y executes Level 4 automated driving.

The mobile object 30x is a first mobile object, and the mobile object 30y is a communication device. The communication device is a second mobile object or a roadside unit. Note that the first embodiment assumes that there is no timing at which the mobile object 30y is disconnected from the base station 20a until the mobile object 30x completes the handover.

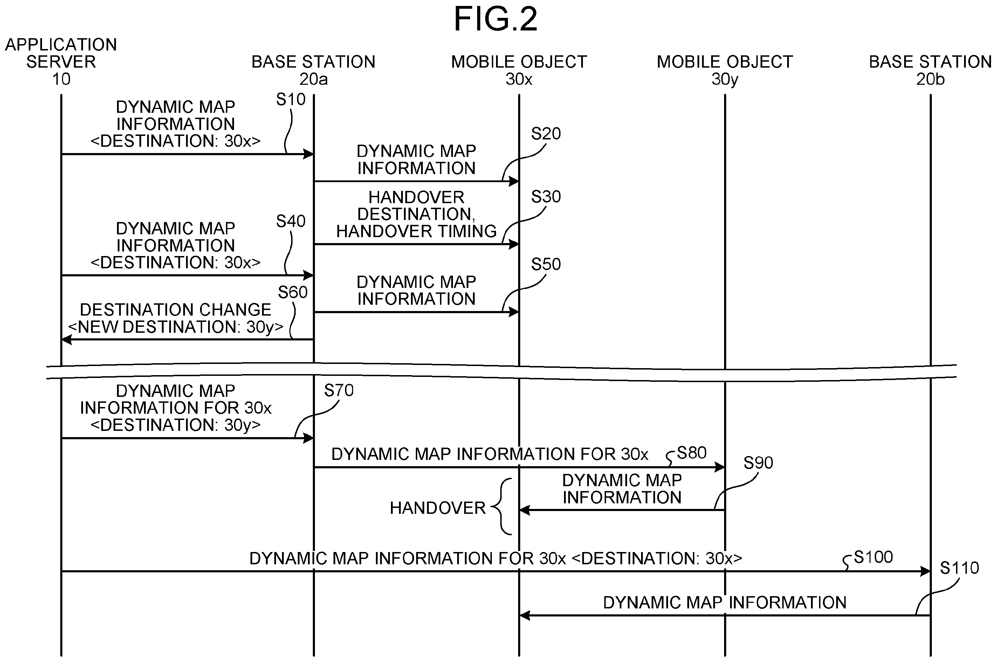

Next, processing for delivering dynamic map information in the dynamic map delivery system 1 will be described. FIG. 2 is a sequence diagram illustrating a procedure for delivering dynamic map information by the dynamic map delivery system according to the first embodiment.

FIG. 2 illustrates an operational flowchart for a data transmission/reception process that is executed among the application server 10, the base stations 20a and 20b, and the mobile objects 30x and 30y. The following section describes a case where the mobile object 30x moves from an area where communication with the base station 20a is possible to an area where communication with the base station 20b is possible.

Note that in some parts in FIG. 2, the mobile object 30x is denoted by "30x" and the mobile object 30y is denoted by "30y". For example, <destination: 30x> indicates that the destination is the mobile object 30x, and <destination: 30y> indicates that the destination is the mobile object 30y. In addition, <new destination: 30y> indicates that the destination is changed to the mobile object 30y.

The application server 10 transmits, to the base station 20a, the dynamic map information the destination of which is the mobile object 30x (S10). The base station 20a receives the dynamic map information and transmits the dynamic map information to the mobile object 30x (S20). As a result, the mobile object 30x receives the dynamic map information, and executes the fully automated driving of the vehicle under a specific condition (Level 4 automated driving) using the dynamic map information.

The mobile object 30x may move from an area where communication with the base station 20a can be performed to an area where communication with the base station 20b can be performed. In this case, the base station 20a notifies the mobile object 30x to perform a handover to the base station 20b before the base station 20a becomes unable to communicate with the mobile object 30x. At the time of this notification, if the base station 20a can confirm that the mobile object 30x is starting fallback operation, the base station 20a also notifies the mobile object 30x of the handover timing, i.e. the timing when the handover is performed. In this manner, when the mobile object 30x is performing fallback operation, the base station 20a notifies the mobile object 30x of the handover destination and the handover timing (S30).

For example, the base station 20a may determine whether the mobile object 30x is starting fallback operation based on whether the mobile object 30x satisfies a condition for starting fallback operation, or may inquire of the mobile object 30x whether to start fallback operation.

If the mobile object 30x executes the handover while staying in fallback operation, loss is caused in the reception of the dynamic map information. The base station 20a sets, as the timing when the handover is performed, a timing at which the mobile object 30x loses only information with a high update frequency among the dynamic map information. Information with a high update frequency is information that is updated at shorter intervals than specific time intervals. An example of information with a high update frequency is the dynamic information included in the dynamic map information.

Thereafter, until receiving a change of the destination of the dynamic map information from the base station 20a, the application server 10 transmits the dynamic map information the destination of which is the mobile object 30x to the base station 20a (S40). As a result, the base station 20a receives the dynamic map information and transmits the dynamic map information to the mobile object 30x (S50).

After notifying the mobile object 30x of the handover destination and the handover timing, the base station 20a selects the mobile object 30y near the mobile object 30x, and requests the mobile object 30x to establish a sidelink connection between the mobile object 30x and the mobile object 30y. The communication device that is selected by the base station 20a is a device (here, the mobile object 30y) capable of sidelink connection with the mobile object 30x. The sidelink connection is a sidelink-type connection in which direct communication is performed between the vehicles, namely between the mobile objects 30x and 30y.

After receiving the request, the mobile object 30x makes a request to the mobile object 30y for the sidelink connection with the mobile object 30y. As a result, the mobile object 30y accepts the sidelink connection, and communication through the sidelink connection is enabled between the mobile objects 30x and 30y.

Note that the base station 20a may request the mobile object 30y to establish a sidelink connection between the mobile objects 30x and 30y. In this case, the mobile object 30y makes a request to the mobile object 30x for the sidelink connection with the mobile object 30x. Then, the mobile object 30x accepts the sidelink connection, and communication through the sidelink connection is enabled between the mobile objects 30x and 30y.

After completing the sidelink connection, the base station 20a transmits a destination change request to the application server 10 (S60). Specifically, the base station 20a requests the application server 10 to designate the mobile object 30y as the destination of the dynamic information of the dynamic map information to be delivered to the mobile object 30x and deliver the dynamic information. This request specifies that the timing at which the mobile object 30y is designated as the destination of the dynamic information and the dynamic information is delivered is the timing when the mobile object 30x performs the handover from the base station 20a to the base station 20b. That is, the base station 20a transmits, to the application server 10, a request for changing the destination to the mobile object 30y at the handover timing of the mobile object 30x. In addition, the base station 20a transmits the handover timing of the mobile object 30x to the application server 10.

As a result, at the timing when the mobile object 30x performs the handover from the base station 20a to the base station 20b, the application server 10 delivers the dynamic information of the dynamic map information for the mobile object 30x to the base station 20a by setting the mobile object 30y as the destination (S70).

The base station 20a transmits the dynamic information of the dynamic map information for the mobile object 30x to the mobile object 30y (S80). In this case, the base station 20a adds flag information indicating that relay is to be performed to a packet of dynamic map information (in the first embodiment, dynamic information) and transmits the packet to the mobile object 30y.

The mobile object 30y relays the dynamic information of the dynamic map information for the mobile object 30x received from the base station 20a to the mobile object 30x by utilizing the communication having the communication session established by the sidelink connection (S90). In this case, the mobile object 30y determines whether the packet of dynamic information contains flag information indicating that relay is to be performed. In response to determining that the packet contains flag information, the mobile object 30y relays the dynamic information to the mobile object 30x in the sidelink connection.

In this manner, when the mobile object 30x performs the handover from the base station 20a to the base station 20b, the mobile object 30y relays the dynamic information of the dynamic map information for the mobile object 30x received from the base station 20a to the mobile object 30x.

Note that the destination change is not limited to the case where the base station 20a requests the application server 10 to change the destination and the application server 10 changes the destination of the dynamic information. For example, the base station 20a may receive the dynamic information addressed to the mobile object 30x from the application server 10 and change the destination to the mobile object 30y.

After the handover to the base station 20b is completed, the mobile object 30x cancels the communication session between the mobile objects 30x and 30y. Thereafter, the application server 10 transmits the dynamic map information for the mobile object 30x to the base station 20b (S100), and the base station 20b transmits the dynamic map information to the mobile object 30x (S110). Then, the mobile object 30x receives the dynamic map information from the base station 20b.

As described above, in the dynamic map delivery system 1, the mobile object 30y relays the dynamic map information that may have been lost in the mobile object 30x to the mobile object 30x, and thus the mobile object 30x can acquire the dynamic map information without losing the dynamic map information. As a result, the dynamic map delivery system 1 can execute Level 4 automated driving.

Note that during the handover, another device (e.g. a roadside unit) instead of the mobile object 30y may relay the dynamic map information to the mobile object 30x. In a case where the device that relays the dynamic map information to the mobile object 30x is a roadside unit, the roadside unit near the point where the mobile object 30x performs the handover relays the dynamic map information to the mobile object 30x.

Thus, in the first embodiment, when the mobile object 30x performs the handover, the mobile object 30y relays the dynamic information of the dynamic map information for the mobile object 30x received from the base station 20a to the mobile object 30x. As a result, the dynamic map delivery system 1 can execute the switching to the base station 20b by handover without lowering the level of automated driving even when the mobile object 30x is under fallback operation. Therefore, the dynamic map delivery system 1 can execute Level 4 automated driving even at the handover timing during fallback operation.

### Second Embodiment.

Next, the second embodiment will be described. In the second embodiment, the mobile object 30x determines the handover timing and notifies the base station 20a of the handover timing, and the base station 20a transmits the dynamic map information that is lost at the handover timing to the mobile object 30y.

The dynamic map delivery system 1 according to the second embodiment has the same configuration as the dynamic map delivery system 1 according to the first embodiment. In the first embodiment, only the dynamic information is relayed by the mobile object 30y so that the information relayed is limited to a minimum data amount. In the second embodiment, the mobile object 30x autonomously determines the handover timing, and notifies the base station 20a of the determined handover timing. The base station 20a causes the mobile object 30y to relay the dynamic map information that is lost at the handover timing determined by the mobile object 30x so that the dynamic map information is transmitted to the mobile object 30x.

Thus, in the second embodiment, the mobile object 30x determines the handover timing. As a result, while the handover timing is determined by the mobile object 30x, the dynamic map delivery system 1 can execute the switching to the base station 20b by handover without lowering the level of automated driving even when the mobile object 30x is under fallback operation as in the first embodiment. Therefore, the dynamic map delivery system 1 can execute Level 4 automated driving even at the handover timing during fallback operation as in the first embodiment.

### Third Embodiment.

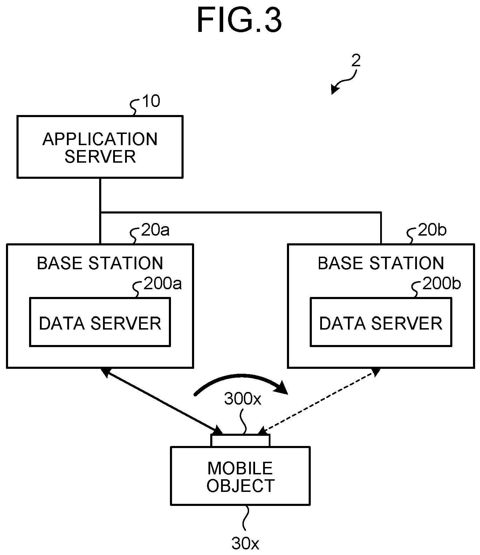

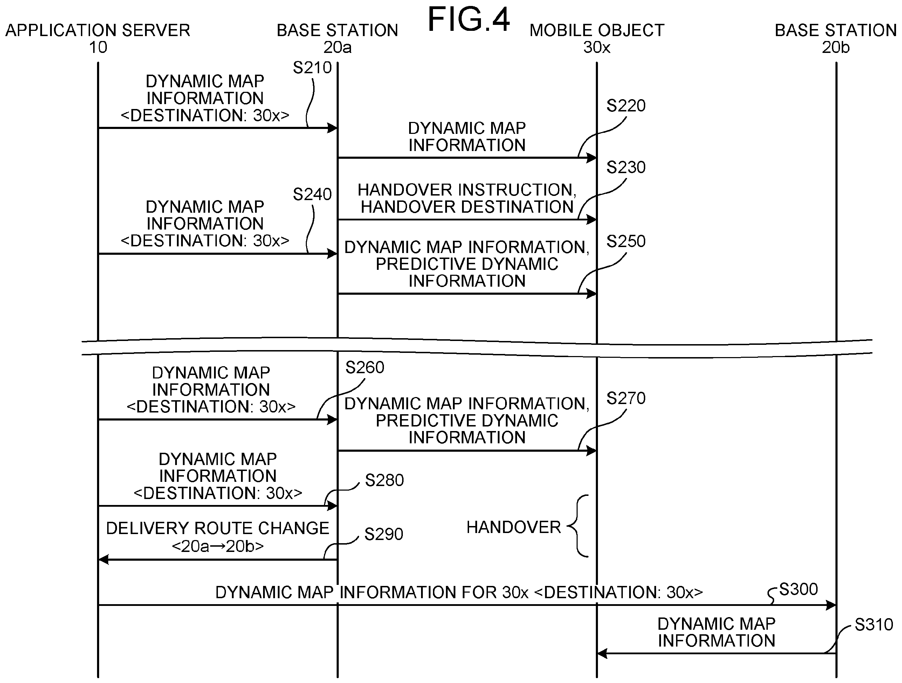

Next, the third embodiment will be described with reference to FIGS. 3 and 4. In the first and second embodiments, the other mobile object 30y different from the mobile object 30x relays the dynamic information to the mobile object 30x to maintain the Level 4 automated driving of the mobile object 30x. In the third embodiment, the base station 20a interpolates the dynamic information by predicting the dynamic information, and delivers the predicted dynamic information to the mobile object 30x in advance.

FIG. 3 is a diagram illustrating a configuration of a dynamic map delivery system according to the third embodiment. Components in FIG. 3 that achieve the same functions as those of the dynamic map delivery system 1 according to the first embodiment illustrated in FIG. 1 are denoted by the same reference signs, and redundant descriptions are omitted.

The dynamic map delivery system 2 includes the application server 10, the base stations 20a and 20b, and the mobile object 30x. The third embodiment describes a case where the mobile object 30x performs a handover from the base station 20a to the base station 20b during fallback operation. During fallback operation, the mobile object 30x cannot be connected to a plurality of base stations simultaneously, and is for a moment not connected to either the base station 20a or the base station 20b.

The base stations 20a and 20b according to the third embodiment include data servers 200a and 200b, respectively. The data server 200a is a server that stores the dynamic map information that has been delivered from the application server 10 to the mobile object 30x. The data server 200b is a server that stores the dynamic map information to be delivered from the application server 10 to the mobile object 30x.

Next, processing for delivering dynamic map information in the dynamic map delivery system 2 will be described. FIG. 4 is a sequence diagram illustrating a procedure for delivering dynamic map information by the dynamic map delivery system according to the third embodiment. Note that processes similar to the processes described in the first and second embodiments are not described here.

FIG. 4 illustrates an operational flowchart for a data transmission/reception process that is executed among the application server 10, the base stations 20a and 20b, and the mobile object 30x. The following section describes a case where the mobile object 30x moves from an area where communication with the base station 20a is possible to an area where communication with the base station 20b is possible.

Note that in some parts in FIG. 4, the mobile object 30x is denoted by "30x" as in FIG. 2. For example, <20a→20b> indicates that the delivery route is changed from the base station 20a to the base station 20b.

The processes S210 and S220 illustrated in FIG. 4 are similar to the processes S10 and S20 described in FIG. 2. That is, the application server 10 transmits, to the base station 20a, the dynamic map information the destination of which is the mobile object 30x (S210). The base station 20a receives the dynamic map information and transmits the dynamic map information to the mobile object 30x (S220). As a result, the mobile object 30x receives the dynamic map information, and executes the fully automated driving of the vehicle under a specific condition (Level 4 automated driving) using the dynamic map information.

The mobile object 30x may move from an area where communication with the base station 20a can be performed to an area where communication with the base station 20b can be performed. In this case, the base station 20a notifies the mobile object 30x of the handover destination and a handover instruction, i.e. an instruction to perform the handover, before the base station 20a becomes unable to communicate with the mobile object 30x (S230).

Specifically, the base station 20a notifies the mobile object 30x of the handover destination and the handover instruction at the timing when the mobile object 30x performs the handover to the base station 20b. At the time of this notification, if the base station 20a can confirm that the mobile object 30x is starting fallback operation, the base station 20a confirms the dynamic map information accumulated in the data server 200a. The base station 20a extracts the dynamic map information transmitted to the mobile object 30x from the dynamic map information accumulated in the data server 200a, and predicts, from the extracted dynamic map information, future dynamic map information corresponding to the time required for the handover. That is, the base station 20a predicts the dynamic map information in the period in which the mobile object 30x executes the handover.

The future dynamic map information predicted by the base station 20a is predictive dynamic information, i.e. dynamic information predicted. The time required for the handover may be a time set in advance as a literal, or may be a time estimated by the base station 20a. Note that the future dynamic map information predicted by the base station 20a may include semi-dynamic information, semi-static information, static information, and the like.

Note that the base station 20a may notify the mobile object 30x of the handover destination and the handover timing in the process S230.

The application server 10 transmits, to the base station 20a, the dynamic map information the destination of which is the mobile object 30x (S240). As a result, the base station 20a receives the dynamic map information. The base station 20a adds the future information predicted, namely the predictive dynamic information, to the received dynamic map information, and transmits the dynamic map information to the mobile object 30x (S250). That is, after notifying the mobile object 30x to perform the handover, the base station 20a transmits the predictive dynamic information to the mobile object 30x in response to receiving the dynamic map information from the application server 10. In other words, the base station 20a starts transmitting the predictive dynamic information to the mobile object 30x at the timing when the base station 20a notifies the mobile object 30x to perform the handover.

The application server 10 continues the process of transmitting the dynamic map information the destination of which is the mobile object 30x to the base station 20a (S260). The base station 20a receives the dynamic map information. The base station 20a continues the process of adding the future information predicted, namely the predictive dynamic information, to the received dynamic map information and transmitting the dynamic map information to the mobile object 30x (S270).

The application server 10 continues the process of transmitting the dynamic map information the destination of which is the mobile object 30x to the base station 20a until a delivery route change request is made by the base station 20a (S280).

The base station 20a continues the process of adding the predictive dynamic information to the received dynamic map information and transmitting the dynamic map information to the mobile object 30x until the timing when the mobile object 30x starts the handover. Once the mobile object 30x starts the handover, the base station 20a stops the process of transmitting the dynamic map information the destination of which is the mobile object 30x to the mobile object 30x. The mobile object 30x executes the fully automated driving of the vehicle under a specific condition (Level 4 automated driving) based on the dynamic map information and the predictive dynamic information received from the base station 20a.

Once the mobile object 30x starts the handover, the base station 20a requests the application server 10 to change the delivery route (S290). That is, the base station 20a requests the application server 10 to change the destination of the dynamic map information for the mobile object 30x from the base station 20a to the base station 20b.

As a result, the application server 10 changes the destination of the dynamic map information for the mobile object 30x from the base station 20a to the base station 20b. That is, the application server 10 transmits, to the base station 20b, the dynamic map information the destination of which is the mobile object 30x (S300). The base station 20b receives the dynamic map information and transmits the dynamic map information to the mobile object 30x (S310). As a result, the mobile object 30x receives the dynamic map information, and executes the fully automated driving of the vehicle under a specific condition (Level 4 automated driving) using the dynamic map information.

Note that if the mobile object 30x starts the handover immediately after S250, the processes S260 to S280 are not executed. In addition, the handover may be started after the processes S260 and S270 are performed multiple times.

The second and third embodiments may be combined. That is, in the dynamic map delivery system 2, the mobile object 30x may determine the handover timing and notify the base station 20a of the handover timing, and the base station 20a may add the predictive dynamic information that is lost at the handover timing to the dynamic map information and transmit the dynamic map information to the mobile object 30y.

Thus, in the third embodiment, the base station 20a predicts the future dynamic information at the time of the handover and transmits the predictive dynamic information to the mobile object 30x. As a result, the dynamic map delivery system 2 can execute the switching to the base station 20b by handover without lowering the level of automated driving even under fallback operation. Therefore, the dynamic map delivery system 2 can execute Level 4 automated driving even at the handover timing during fallback operation as in the first embodiment.

### Fourth Embodiment.

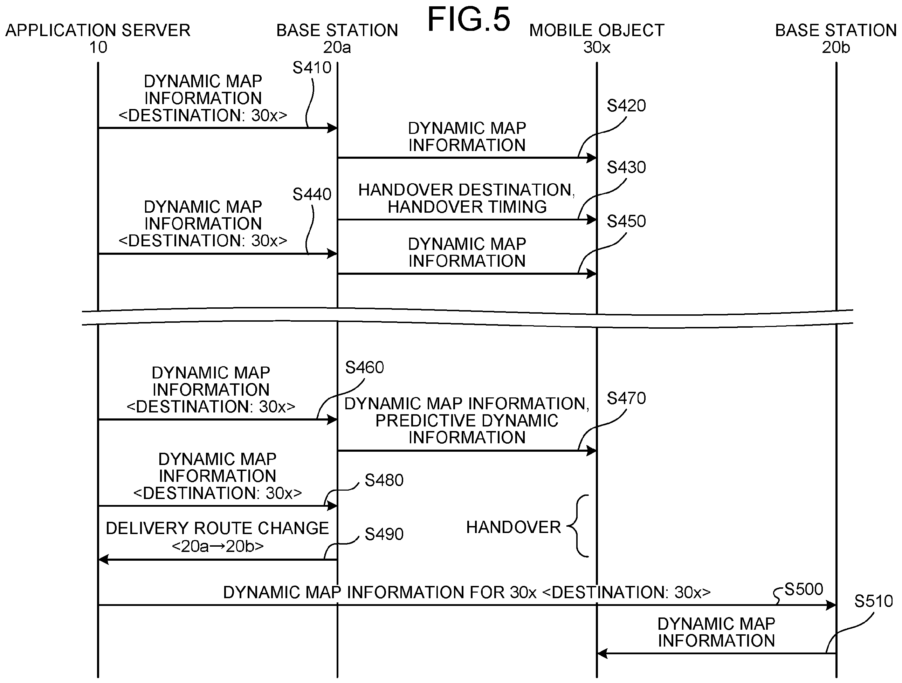

Next, the fourth embodiment will be described with reference to FIG. 5. The base station 20a according to the fourth embodiment transmits predictive dynamic information to the mobile object 30x less frequently than the base station 20a according to the third embodiment.

The dynamic map delivery system 2 according to the fourth embodiment has the same configuration as the dynamic map delivery system 2 according to the third embodiment.

FIG. 5 is a sequence diagram illustrating a procedure for delivering dynamic map information by the dynamic map delivery system according to the fourth embodiment. Note that processes similar to the processes described in the first to third embodiments are not described here. Like FIG. 4, FIG. 5 illustrates an operational flowchart for a data transmission/reception process that is executed among the application server 10, the base stations 20a and 20b, and the mobile object 30x.

In the third embodiment, the base station 20a starts transmitting the predictive dynamic information to the mobile object 30x at the timing when the base station 20a notifies the mobile object 30x to perform the handover. In the fourth embodiment, the base station 20a notifies the mobile object 30x of the handover timing, and transmits the predictive dynamic information to the mobile object 30x immediately before the handover timing.

The processes S410 to S450 illustrated in FIG. 5 are similar to the processes S10 to S50 described in FIG. 2. For example, in S430, as in S30, the base station 20a notifies the mobile object 30x of the handover destination and the handover timing before the base station 20a becomes unable to communicate with the mobile object 30x.

Thereafter, the dynamic map delivery system 2 executes the processes S460 to S510 which are similar to the processes S260 to S310. For example, in S470, as in S270, the base station 20a adds the future information predicted, namely the predictive dynamic information, to the received dynamic map information and transmits the dynamic map information to the mobile object 30x. That is, the base station 20a transmits the dynamic map information received from the application server 10 and the predictive dynamic information predicted using the data server 200a to the mobile object 30x immediately before the designated handover timing. Thereafter, the mobile object 30x executes the handover from the base station 20a to the base station 20b, and the application server 10 executes the change of the delivery route.

The second and fourth embodiments may be combined. That is, in the dynamic map delivery system 2, the mobile object 30x may determine the handover timing and notify the base station 20a of the handover timing, and the base station 20a may add the predictive dynamic information that is lost at the handover timing to the dynamic map information and transmit the dynamic map information to the mobile object 30y.

Thus, in the fourth embodiment, the base station 20a transmits the predictive dynamic information to the mobile object 30x immediately before the handover timing. As a result, the dynamic map delivery system 2 can execute Level 4 automated driving similar to that in the first embodiment with a small amount of information transmission as compared with the third embodiment.

### Fifth Embodiment.

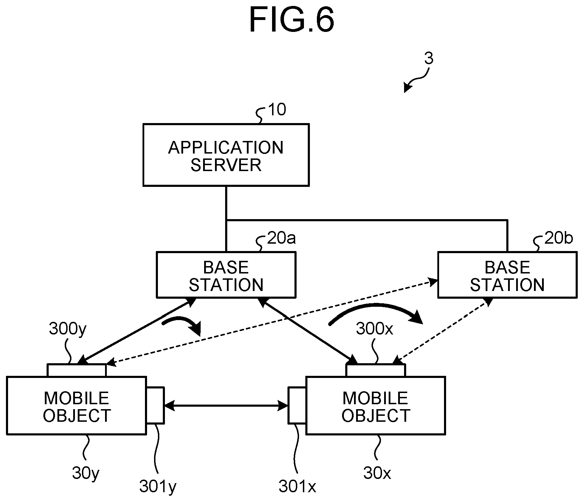

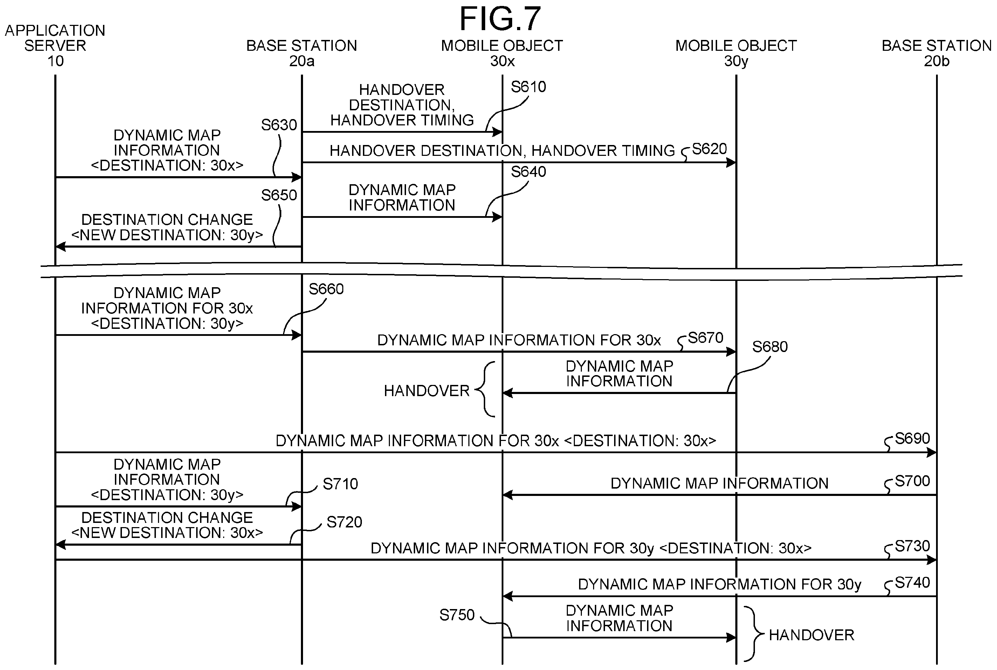

Next, the fifth embodiment will be described with reference to FIGS. 6 and 7. In the fifth embodiment, the dynamic information of the dynamic map information is relayed when a plurality of mobile objects perform a handover.

FIG. 6 is a diagram illustrating a configuration of a dynamic map delivery system according to the fifth embodiment. Components in FIG. 6 that achieve the same functions as those of the dynamic map delivery system 1 according to the first embodiment illustrated in FIG. 1 are denoted by the same reference signs, and redundant descriptions are omitted.

The dynamic map delivery system 3 has the same components as the dynamic map delivery system 1. That is, the dynamic map delivery system 3 includes the application server 10, the base stations 20a and 20b, and the mobile objects 30x and 30y.

In the fifth embodiment, both the mobile objects 30x and 30y are connected to the base station 20a, and each of the mobile objects 30x and 30y performs a handover to the base station 20b under fallback operation. In this case, the mobile object 30x performs the handover first, and the mobile object 30y performs the handover later. For example, the mobile object 30x starts moving from an area where communication with the base station 20a is possible to an area where communication with the base station 20b is possible earlier than the mobile object 30y.

FIG. 7 is a sequence diagram illustrating a procedure for delivering dynamic map information by the dynamic map delivery system according to the fifth embodiment. Note that processes similar to the processes described in the first to fourth embodiments are not described here.

FIG. 7 illustrates an operational flowchart for a data transmission/reception process that is executed among the application server 10, the base stations 20a and 20b, and the mobile objects 30x and 30y.

The mobile objects 30x and 30y may move from an area where communication with the base station 20a can be performed to an area where communication with the base station 20b can be performed. In this case, the base station 20a notifies the mobile objects 30x and 30y that the mobile objects 30x and 30y perform a handover to the base station 20b before the base station 20a becomes unable to communicate with the mobile object 30x. At the time of this notification, if the base station 20a can confirm that the mobile objects 30x and 30y are starting fallback operation, the base station 20a also notifies the mobile objects 30x and 30y of the timing when the handover is performed. In this manner, the base station 20a notifies the mobile object 30x of the handover destination and the handover timing (S610), and notifies the mobile object 30y of the handover destination and the handover timing (S620).

When notifying the mobile objects 30x and 30y of the handover destination and the handover timing, the base station 20a instructs the mobile objects 30x and 30y to set up a communication session between the mobile objects 30x and 30y and in which order the handovers are performed. Following this instruction, the mobile objects 30x and 30y set up the communication session.

The dynamic map delivery system 3 executes the processes S630 to S700 which are similar to the processes S40 to S110. As a result, at the timing when the mobile object 30x performs the handover from the base station 20a to the base station 20b, the mobile object 30y relays the dynamic information included in the dynamic map information for the mobile object 30x received from the base station 20a to the mobile object 30x.

Note that the mobile object 30x according to the fifth embodiment does not cancel the communication session between the mobile objects 30x and 30y following the completion of the handover to the base station 20b. After the mobile object 30x completes the handover to the base station 20b, the mobile object 30y executes the handover from the base station 20a to the base station 20b. Specifically, until receiving a change of the destination of the dynamic map information from the base station 20a, the application server 10 transmits the dynamic map information the destination of which is the mobile object 30y to the base station 20a (S710).

Once the mobile object 30x completes the handover to the base station 20b, the base station 20a transmits a destination change request to the application server 10 (S720). Specifically, the base station 20a requests the application server 10 to designate the mobile object 30x as the destination of the dynamic information of the dynamic map to be delivered to the mobile object 30y and deliver the dynamic information. This request specifies that the timing at which the mobile object 30x is designated as the destination and the dynamic information is delivered is the timing when the mobile object 30y performs the handover from the base station 20a to the base station 20b. That is, the base station 20a transmits, to the application server 10, a request for changing the destination to the mobile object 30x at the handover timing of the mobile object 30y. In addition, the base station 20a transmits the handover timing of the mobile object 30y to the application server 10.

As a result, at the timing when the mobile object 30y performs the handover from the base station 20a to the base station 20b, the application server 10 delivers the dynamic information of the dynamic map information for the mobile object 30y to the base station 20b by setting the mobile object 30x as the destination (S730).

The base station 20b transmits the dynamic information of the dynamic map information for the mobile object 30y to the mobile object 30x (S740). In this case, the base station 20b adds flag information indicating that relay is to be performed to a packet of dynamic information and transmits the packet to the mobile object 30x.

The mobile object 30x relays the dynamic information of the dynamic map information for the mobile object 30y received from the base station 20b to the mobile object 30y by utilizing the communication having the communication session established by the sidelink connection (S750). In this case, the mobile object 30x determines whether the packet of dynamic information contains flag information indicating that relay is to be performed. In response to determining that the packet contains flag information, the mobile object 30x relays the dynamic information to the mobile object 30y in the sidelink connection.

In this manner, when the mobile object 30y performs the handover from the base station 20a to the base station 20b, the mobile object 30x relays the dynamic information of the dynamic map information for the mobile object 30y received from the base station 20b to the mobile object 30y. As a result, the dynamic map delivery system 3 can deliver the dynamic map information to the plurality of mobile objects 30x and 30y under fallback operation without losing the dynamic map information at the handover timing.

Note that the base station 20a does not necessarily make a destination change request to the application server 10 for changing the destination of the dynamic information, but the base station 20a may receive the dynamic information addressed to the mobile object 30y from the application server 10 and change the destination to the mobile object 30x.

After the handover to the base station 20b is completed, the mobile object 30y cancels the communication session between the mobile objects 30x and 30y. Thereafter, the application server 10 transmits the dynamic map information to the base station 20b, and the base station 20b transmits the dynamic map information to the mobile object 30y. Then, the mobile object 30y receives the dynamic map information from the base station 20b.

The second and fifth embodiments may be combined. That is, in the dynamic map delivery system 3, the mobile object 30x may determine the handover timing and notify the base station 20a of the handover timing, and the base station 20a may transmit the dynamic map information that is lost at the handover timing to the mobile object 30y. In addition, in the dynamic map delivery system 3, the mobile object 30y may determine the handover timing and notify the base station 20a of the handover timing, and the base station 20a may transmit the dynamic map information that is lost at the handover timing to the mobile object 30x.

Moreover, the third and fifth embodiments may be combined. That is, in the dynamic map delivery system 3, the base station 20a may transmit the predictive dynamic information to the mobile objects 30x and 30y.

Moreover, the fourth and fifth embodiments may be combined. That is, in the dynamic map delivery system 3, the base station 20a may transmit the predictive dynamic information to the mobile object 30x immediately before the handover timing of the mobile object 30x. In addition, in the dynamic map delivery system 3, the base station 20a may transmit the predictive dynamic information to the mobile object 30y immediately before the handover timing of the mobile object 30y.

Moreover, the second and fifth embodiments may be combined. That is, in the dynamic map delivery system 3, the mobile objects 30x and 30y may determine the handover timing and notify the base station 20a of the handover timing, and the base station 20a may add the predictive dynamic information that is lost at the handover timing to the dynamic map information and transmit the dynamic map information to the mobile objects 30x and 30y.

Thus, in the fifth embodiment, when the mobile object 30x performs the handover, the mobile object 30y relays the dynamic information of the dynamic map information for the mobile object 30x received from the base station 20a to the mobile object 30x. In addition, when the mobile object 30y performs the handover, the mobile object 30x relays the dynamic information of the dynamic map information for the mobile object 30y received from the base station 20b to the mobile object 30y.

As a result, the dynamic map delivery system 3 can execute the switching to the base station 20b by handover without lowering the level of automated driving even when the plurality of mobile objects 30x and 30y are under fallback operation. Therefore, the dynamic map delivery system 3 can execute Level 4 automated driving even at the handover timing during fallback operation as in the first embodiment.

Next, a hardware configuration of the application server 10 will be described. The application server 10 is implemented by processing circuitry. The processing circuitry may be a memory and a processor that executes a program stored in the memory, or may be dedicated hardware. The processing circuitry is also called a control circuit.

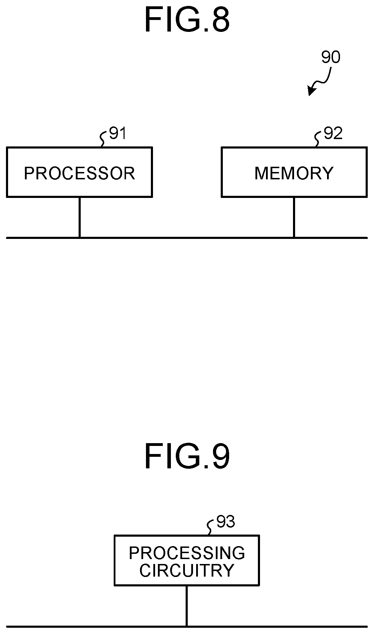

FIG. 8 is a diagram illustrating an exemplary configuration of processing circuitry in the case that the processing circuitry provided in the application server according to the first to fifth embodiments is implemented by a processor and a memory. The processing circuitry 90 illustrated in FIG. 8 is a control circuit and includes a processor 91 and a memory 92. In a case where the processing circuitry 90 is configured with the processor 91 and the memory 92, each function of the processing circuitry 90 is implemented by software, firmware, or a combination of software and firmware. Software or firmware is described as a program and stored in the memory 92. In the processing circuitry 90, the processor 91 reads and executes the program stored in the memory 92, thereby implementing each function. That is, the processing circuitry 90 includes the memory 92 for storing a program that results in the execution of processing of the application server 10. It can also be said that this program is a program for causing the application server 10 to execute each function implemented by the processing circuitry 90. This program may be provided by a storage medium in which the program is stored, or may be provided by other means such as a communication medium.

It can also be said that the above program is a program that causes the application server 10 to execute the process of delivering the dynamic map information to the mobile objects 30x and 30y via the base station 20a or the base station 20b.

The processor 91 is exemplified by a central processing unit (CPU), a processing device, an arithmetic device, a microprocessor, a microcomputer, or a digital signal processor (DSP). Examples of the memory 92 include a non-volatile or volatile semiconductor memory, a magnetic disk, a flexible disk, an optical disc, a compact disc, a mini disc, a digital versatile disc (DVD), and the like. Examples of non-volatile or volatile semiconductor memories include a random access memory (RAM), a read only memory (ROM), a flash memory, an erasable programmable ROM (EPROM), an electrically EPROM (EEPROM, registered trademark), and the like.

FIG. 9 is a diagram illustrating an example of processing circuitry in the case that the processing circuitry provided in the application server according to the first to fifth embodiments is implemented by dedicated hardware. For example, the processing circuitry 93 illustrated in FIG. 9 is a single circuit, a composite circuit, a programmed processor, a parallel programmed processor, an application specific integrated circuit (ASIC), a field programmable gate array (FPGA), or a combination thereof. The processing circuitry 93 may be partially implemented by dedicated hardware, and partially implemented by software or firmware. In this manner, the processing circuitry 93 can implement the above-described functions using dedicated hardware, software, firmware, or a combination thereof.

The configurations described in the above-mentioned embodiments indicate examples. The embodiments can be combined with another well-known technique and with each other, and some of the configurations can be omitted or changed, insofar as within the scope of the appended claims.

### Reference Signs List

1 to 3 dynamic map delivery system; 10 application server; 20a, 20b base station; 30x, 30y mobile object; 90, 93 processing circuitry; 91 processor; 92 memory; 200a, 200b data server; 300x, 300y mobile communication unit; 301x, 301y sidelink communication unit.

## Claims

1. An application server (10) that delivers dynamic map information to a first mobile object (30x) that receives the dynamic map information, the dynamic map information being information of a dynamic map that is used for execution of fully automated driving under a specific condition, wherein
when the first mobile object (30x) executes a handover from a first base station (20a) capable of transmitting the dynamic map information in a first area to a second base station (20b) capable of transmitting the dynamic map information in a second area, in a case where the first mobile object (30x) is in fallback operation in situations in which simultaneous communication with the first base station (20a) and the second base station (20b) is unavailable, the application server (10) delivers the dynamic map information to the first mobile object (30x) via the first base station (20a) and a communication device (30y) capable of receiving the dynamic map information from the first base station (20a), wherein the communication device (30y) is a second mobile object or a roadside unit.

2. An information delivery method for an application server (10) to deliver dynamic map information to a first mobile object (30x) that receives the dynamic map information, the dynamic map information being information of a dynamic map that is used for execution of fully automated driving under a specific condition, the information delivery method comprising
a delivery step in which when the first mobile object (30x) executes a handover from a first base station (20a) capable of transmitting the dynamic map information in a first area to a second base station (20b) capable of transmitting the dynamic map information in a second area, in a case where the first mobile object (30x) is in fallback operation in situations in which simultaneous communication with the first base station (20a) and the second base station (20b) is unavailable, the application server (10) delivers the dynamic map information to the first mobile object (30x) via the first base station (20a) and a communication device (30y) capable of receiving the dynamic map information from the first base station (20a) , wherein the communication device (30y) is a second mobile object or a roadside unit.

## Patentansprüche

1. Anwendungsserver (10), der dynamische Karteninformationen an ein erstes mobiles Objekt (30x) liefert, das die dynamischen Karteninformationen empfängt, wobei die dynamischen Karteninformationen Informationen einer dynamischen Karte sind, die zur Ausführung eines vollautomatisierten Fahrens unter einer bestimmten Bedingung verwendet werden, wobei
wenn das erste mobile Objekt (30x) eine Übergabe von einer ersten Basisstation (20a), die die dynamischen Karteninformationen in einem ersten Bereich übermitteln kann, an eine zweite Basisstation (20b), die die dynamischen Karteninformationen in einem zweiten Bereich übermitteln kann, ausführt, in einem Fall, in dem sich das erste mobile Objekt (30x) in einem Fallback-Betrieb befindet, in Situationen, in denen eine gleichzeitige Kommunikation mit der ersten Basisstation (20a) und der zweiten Basisstation (20b) nicht verfügbar ist, liefert der Anwendungsserver (10) die dynamischen Karteninformationen über die erste Basisstation (20a) und eine Kommunikationsvorrichtung (30y), die die dynamischen Karteninformationen von der ersten Basisstation (20a) empfangen kann, an das erste mobile Objekt (30x), wobei die Kommunikationsvorrichtung (30y) ein zweites mobiles Objekt oder eine straßenseitige Einheit ist.

2. Informationsübermittlungsverfahren für einen Anwendungsserver (10) zum Übermitteln dynamischer Karteninformationen an ein erstes mobiles Objekt (30x), das die dynamischen Karteninformationen empfängt, wobei die dynamischen Karteninformationen Informationen einer dynamischen Karte sind, die zur Ausführung eines vollautomatisierten Fahrens unter einer bestimmten Bedingung verwendet werden, wobei das Informationsübermittlungsverfahren
einen Übermittlungsschritt umfasst, bei dem, wenn das erste mobile Objekt (30x) eine Übergabe von einer ersten Basisstation (20a), die in der Lage ist, die dynamischen Karteninformationen in einem ersten Bereich zu übermitteln, an eine zweite Basisstation (20b) übermittelt, die in der Lage ist, die dynamischen Karteninformationen in einem zweiten Bereich zu übermitteln, in einem Fall, in dem sich das erste mobile Objekt (30x) in einem Fallback-Betrieb befindet, in Situationen, in denen eine gleichzeitige Kommunikation mit der ersten Basisstation (20a) und der zweiten Basisstation (20b) nicht verfügbar ist, der Anwendungsserver (10) die dynamischen Karteninformationen über die erste Basisstation (20a) und eine Kommunikationsvorrichtung (30y), die die dynamischen Karteninformationen von der ersten Basisstation (20a) empfangen kann, an das erste mobile Objekt (30x) übermittelt, wobei die Kommunikationsvorrichtung (30y) ein zweites mobiles Objekt oder eine straßenseitige Einheit ist.

## Revendications

1. Serveur d'application (10) qui distribue des informations de carte dynamique à un premier objet mobile (30x) qui reçoit les informations de carte dynamique, les informations de carte dynamique étant des informations d'une carte dynamique qui est utilisée pour l'exécution d'une conduite entièrement automatisée dans des conditions spécifiques, dans lequel
lorsque le premier objet mobile (30x) exécute un transfert à partir d'une première station de base (20a) capable de transmettre les informations de carte dynamique dans une première zone à une seconde station de base (20b) capable de transmettre les informations de carte dynamique dans une seconde zone, dans un cas où le premier objet mobile (30x) est en opération de secours dans des situations dans lesquelles une communication simultanée avec la première station de base (20a) et la seconde station de base (20b) n'est pas disponible, le serveur d'application (10) distribue les informations de carte dynamique au premier objet mobile (30x) via la première station de base (20a) et un dispositif de communication (30y) capable de recevoir les informations de carte dynamique à partir de la première station de base (20a), dans lequel le dispositif de communication (30y) est un second objet mobile ou une unité de bas-côté.

2. Procédé de distribution d'informations pour un serveur d'application (10) pour distribuer des informations de carte dynamique à un premier objet mobile (30x) qui reçoit les informations de carte dynamique, les informations de carte dynamique étant des informations d'une carte dynamique qui est utilisée pour l'exécution d'une conduite entièrement automatisée dans des conditions spécifiques, le procédé de distribution d'informations comprenant
une étape de distribution dans laquelle lorsque le premier objet mobile (30x) exécute un transfert intercellulaire à partir d'une première station de base (20a) capable de transmettre les informations de carte dynamique dans une première zone à une seconde station de base (20b) capable de transmettre les informations de carte dynamique dans une seconde zone, dans le cas où le premier objet mobile (30x) est en opération de secours dans des situations dans lesquelles une communication simultanée avec la première station de base (20a) et la seconde station de base (20b) est indisponible, le serveur d'application (10) fournit les informations de carte dynamique au premier objet mobile (30x) via la première station de base (20a) et un dispositif de communication (30y) capable de recevoir les informations de carte dynamique à partir de la première station de base (20a), dans lequel le dispositif de communication (30y) est un second objet mobile ou une unité de bas-côté.
